# EUROPEAN PATENT SPECIFICATION

(11) **EP 4 154 131 B1**
(45) Date of publication and mention of the grant of the patent: **28.10.2026**
(21) Application number: 21724141.3
(22) Date of filing: 21.04.2021
(51) Int. Cl.: G06F 16/957, G06F 3/0482, G06F 3/04855

(54) **SIDEBAR SEARCH PANE**
SEITENLEISTENSUCHSCHEIBE
VOLET DE RECHERCHE DE BARRE LATÉRALE

(30) Priority: 19.05.2020 US 202063027324 P; 14.10.2020 US 202017070760
(43) Date of publication of application: 29.03.2023
(73) Proprietor: Microsoft Technology Licensing, LLC, Redmond, WA 98052-6399 (US)
(72) Inventor: YUSUF, Maryam, Redmond, Washington 98052-6399 (US); BROWN, Jared, Redmond, Washington 98052-6399 (US); RAI, Anjali Muralidhar, Redmond, Washington 98052-6399 (US); BORZA, Paul Valentin, Redmond, Washington 98052-6399 (US); YAMAGATA, Tomoe, Redmond, Washington 98052-6399 (US); VARANDA, Julian, Redmond, Washington 98052-6399 (US); WU, Dan, Redmond, Washington 98052-6399 (US); BOOS, Jessica A., Redmond, Washington 98052-6399 (US)
(74) Representative: Page White Farrer
(86) International application number: PCT/US2021/028266
(87) International publication number: WO 2021/236276

(56) References cited:
- US-A1- 2006 080 292
- US-A1- 2012 005 583
- US-A1- 2012 054 143
- US-A1- 2016 098 463
- US-A1- 2018 107 632
- US-A1- 2018 129 509
- US-B2- 8 527 881

## Description

### BACKGROUND

Computer browsers are computer applications that provide users significant functionality related to many different computer related tasks, including searching the Internet or other networks and displaying the results of such searches. Indeed, many users perform many different web tasks while in a browser environment, such as reading documents, searching for information and/or participating in various forms of e-commerce. Unfortunately, there are some limitations to current browser systems. For instance, when a user is active in a particular web page and decides to conduct a specific search, such as a search on a word or phrase within the current web page, the user must open a new browser instance (e.g., a new tab) to perform the search. Consequently, the user must leave their current web task to access the results of the search request. Further, in order to request the search, in many systems, the user must perform several steps. For instance, the user may copy the text and paste it in a new browser-tab search bar and select the enter key to conduct the search. Alternatively, the user must highlight the text and invoke a short cut, e.g., where a user may highlight a link, a word or a phrase, "right-click" a mouse and pull up a context menu option, e.g., "Open link in new tab" or choose "Search for x", where x is the highlighted text. In such a case, the browser will open a new instance of a search browser window and require the user to navigate to that window or tab to see the results of the search. To return to the current web page, the user must then navigate back, e.g., by selecting the appropriate tab in a tab browser, or selecting the back button.

It is with respect to this general technical environment that aspects of the present technology disclosed herein have been contemplated. Furthermore, although a general environment has been discussed, it should be understood that the examples described herein should not be limited to the general environment identified in the background.

### SUMMARY

This summary is provided to introduce a selection of concepts in a simplified form that are further described below in the Detailed Description section. This summary is not intended to identify key features or essential features of the claimed subject matter, nor is it intended to be used as an aid in determining the scope of the claimed subject matter.

The present disclosure is directed to providing, in a browser environment, sidebar-search capability to users. A browser environment displays content, and subsequently receives a request to conduct a sidebar search. In response the browser passes the requested search parameter to the search engine along with an indication that the search request is for a sidebar search pane, e.g., a predetermined, smaller portion of browser display area. The browser receives the results and generates a display, which is then rendered in the sidebar search pane alongside the currently displayed content page within the same browser window. Because of this sidebar search pane, the user is able to view some requested search results without leaving the context of their current browser tab or web task.

The sidebar search pane is separately navigable and may include different vertical search options such as image search results or video search results. In other embodiments, such as when a user is logged into a particular proprietary system, the sidebar search results may be the results of the proprietary system. Examples may include environments where a user is logged in at work or a corporate account having access to specific files, the search results may include those files for that user. In aspects, the sidebar search request includes information related to the currently displayed content page to disambiguate the request, to return more relevant information.

In aspects of the disclosure, a computer-implemented method is performed whereby the method involves displaying, in a browser application, a primary content page having first dimensions; receiving selected text within the primary content page to be sidebar searched; receiving a request to perform a search based on the selected text; sending a sidebar search request to a search service for processing, the sidebar search request comprising, in addition to the selected text to be searched, a modified user agent indicating that the request is coming from an otherwise known browser and indicating that a search service should return results for rendering in a sidebar search pane; responsive to the sidebar search request, receiving tailored results from the search service for display in the sidebar search pane, wherein the modified user agent enables the search service to configure the response for the sidebar search pane; in response to receiving the tailored results, displaying, in the browser application, the tailored results from the search in the sidebar search pane; and re-rendering the primary content page within second dimensions alongside the sidebar search pane, wherein the second dimensions are smaller than the first dimensions, wherein the browser is a tabbed browser and the primary content page and sidebar search pane share the same tab; wherein the sidebar search pane includes a plurality of controls, wherein at least two of the controls include a search box for refining the sidebar search results and a search in tab control for launching a new tab request, wherein the method further comprises: receiving user input of a search parameter to the search box control; on selection of the search box control, performing a subsequent sidebar search, producing new results; and rendering the new results of the subsequent sidebar search in the sidebar search pane.

In aspects, the tailored results may include a plurality of vertical search options for refining the contents of the sidebar search pane. Further, the method may also disambiguate the search request by determining a context of the primary content page.

The method may involve a search service that is an enterprise search service and the results are from an enterprise database.

In yet another aspect, which is not claimed, the present disclosure involves computer implemented methods for receiving a request to perform a search in a non-browser application; receiving a request to display the search results in a browser; determining a primary web page for display in a primary content pane; and render the primary content page alongside sidebar search results in a sidebar search pane.

Non-limiting examples of the present disclosure describe systems and methods for providing search results in a search pane that is alongside the original document or search window. The system will allow for a context menu whereby the user can select to search in a sidebar or, in some cases, open a search in a new tab. The system then passes highlighted text as a parameter to the search engine. The results are provided in an area alongside the currently opened window enabling the user to experience search results without leaving the context of their current search tab.

### BRIEF DESCRIPTION OF THE DRAWINGS

Non-limiting and non-exhaustive examples are described with reference to the following figures:
FIG. 1 is an exemplary operating environment having a client computer system in communication with a search service and having a browser application capable of displaying sidebar search pane.
FIG. 2A illustrates an exemplary browser application user interface showing a web page, the browser application having sidebar search functionality.
FIG. 2B illustrates the browser application user interface of FIG 2A, further illustrating a context menu used to request a sidebar search.
FIG. 2C illustrates the browser application user interface of FIGs 2A and 2B, further illustrating a resulting sidebar search pane.
FIG. 2D illustrates the browser application user interface of FIGs. 2A-2C, showing the sidebar search pane without the context menu of FIGs. 2B and 2C.
FIG. 3A is an exemplary sidebar search pane of a browser application as shown in FIGs. 2A-2D, displaying an alternative vertical search option for image results.
FIG. 3B is another exemplary sidebar search pane of a browser application as shown in FIGs. 2A-2D, displaying another alternative vertical search for video results.
FIG. 4 illustrates the browser application user interface of FIGs 2A-2D and Figs. 3A-3B, showing updated results in the sidebar search pane.
FIG. 5 illustrates the results of opening a sidebar search in a new tab.
FIG. 6 illustrates an exemplary browser user interface having is an exemplary sidebar search pane of a browser application, displaying results from a sidebar search for proprietary or enterprise related data.
FIG 7 illustrates a simplified block diagram of modules used in embodiments described herein relating to displaying a sidebar search pane.
FIG 8 is a flow diagram of an exemplary browser method performed in conjunction with embodiments of the present disclosure.
FIG. 9 is a flow diagram of an exemplary search service method performed in conjunction with embodiments of the present disclosure.
FIG. 10 illustrates an exemplary operating system user interface showing a search functionality used to launch a browser instance having sidebar search functionality.
FIG. 11 illustrates a browser instance launched from the user interface shown in FIG. 10.
FIG. 12 is a flow diagram of an exemplary search and display method related to the user interfaces shown in FIGs. 10 and 11.
FIG. 13 illustrates an exemplary computing device for executing one or more aspects of the present disclosure.
FIG. 14 is a simplified block diagram of an exemplary computing device with which aspects of the present disclosure may be practiced.
FIG. 15 is a block diagram illustrating physical components (e.g., hardware) of a computing device with which aspects of the present disclosure may be practiced.

### DETAILED DESCRIPTION

Various embodiments will be described in detail with reference to the drawings, wherein like reference numerals represent like parts and assemblies throughout the several views. Reference to various embodiments does not limit the scope of the claims attached hereto. Additionally, any examples set forth in this specification are not intended to be limiting and merely set forth some of the many possible embodiments for the appended claims.

Generally, the present disclosure is directed to providing, in a browser environment, sidebar-search capability to users. In an exemplary experience, a user may be viewing a content page in a browser environment and choose to request additional information related to a portion of the content page while still viewing the content page. The content page may be a web page or a results list or any other content, including text, images, videos, hyperlinks, navigational controls, etc. The content within the content page may be selectable by traditional methods. While viewing the content page in the primary pane, the user may highlight a portion of the text to effectively "select" a word or set of text. Once text or an image is selected, the user may use various input options, (e.g., right-click on a mouse) to effectively generate a pop-up or context menu that includes an option for conducting a "sidebar search". In response to choosing the sidebar search option, the browser passes the highlighted or selected text as a parameter to the search engine along with an indication that the search request is for a sidebar search pane, e.g., a predetermined, smaller portion of browser display area. The results are then returned and rendered in an area alongside the currently opened content page within the same browser window. The area alongside the currently open content pane is considered the sidebar search pane. As a result of this sidebar search pane, the user is able to view at least some requested search information related to the topic within the primary content page without leaving the context of their current browser tab or web task.

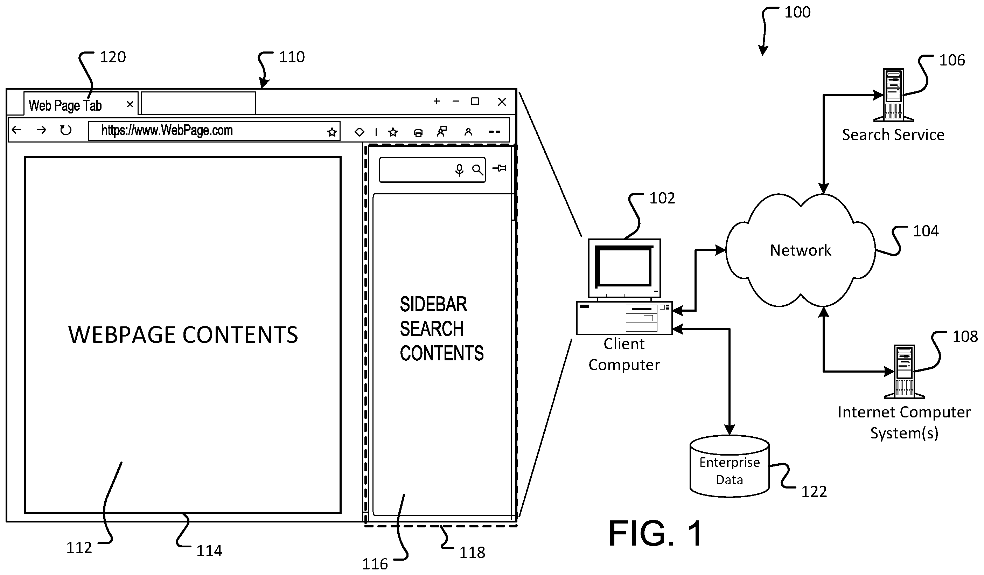

Moreover, in embodiments, since sidebar search pane is part of the same browser tab. Therefore the user may close the primary content page and the sidebar search pane with one selection of the close tab control. Further, since the sidebar search pane is a specialized area for displaying search results, the results can be tailored to fit within the dedicated area. Such tailoring may result in few search-result items to be displayed, thereby saving some bandwidth in the transmission of content. FIG. 1 illustrates an exemplary environment 100 for conducting a sidebar search in accordance with embodiments of the current disclosure. The environment 100 has a client computer 102, which communicates over network 104 with a search service 106. The search service 106 receives requests for information and provides results back to client computer 102. The search service 106 often communicates with other Internet computer systems 108 to help satisfy the requests from the computer system 102 through search service 106. As information is returned to the client computer 102, it is rendered in a browser interface 110 as managed by client computer 102. The browser interface 110, in accordance with aspects of the present disclosure, includes a browser process or browser page that includes both web page contents 112 in a primary browser pane 114 and sidebar search contents 116 in a sidebar search pane 118.

In a typical use scenario, while a user is interacting with browser interface 110 within primary browser pane 114, as indicated by web page tab 120, the user requests additional information through the browser interface 110 for display. Upon receiving the request for additional information, the browser interface and associated client computer system 102 requests the additional information 116 from the search service 108, the request indicating the results are to be provided in a smaller area, e.g., the sidebar search pane 118. That additional information, once received is then displayed in the sidebar search pane 118. The sidebar search pane 118 is displayed alongside the primary browser pane 114 such that the user is able to view some if not all the additional information requested without the need to navigate to another tab or browser window.

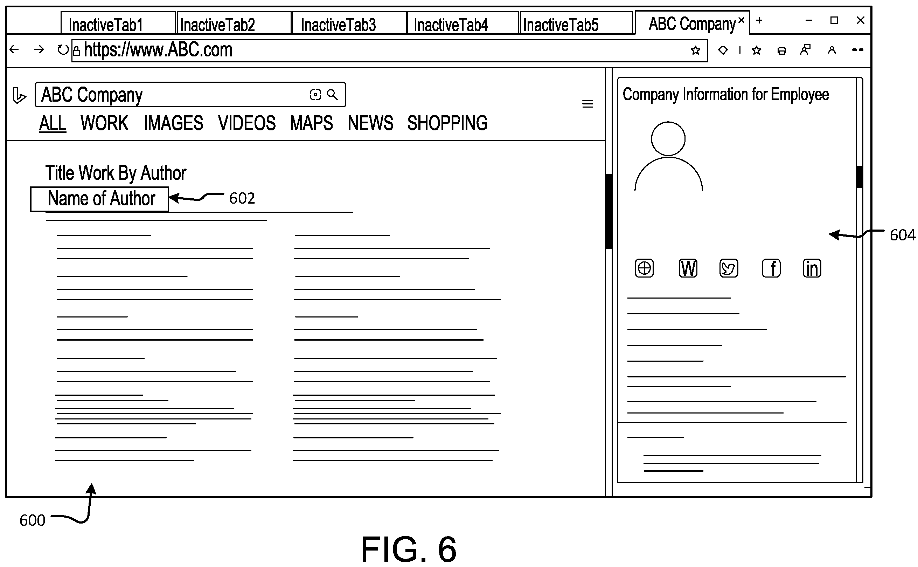

Additionally, in accordance with some embodiments, the client computer system 102 may have access to enterprise data 122. The sidebar search functionality described herein may involve a search of such enterprise data over a network, such as network 104 or a separate, proprietary network. The sidebar search function, may display content from enterprise data 122 in sidebar search pane 118, as discussed in more detail below in conjunction with FIG. 6. As may be appreciated, given the search capability of browsers, the sidebar search contents may contain information from many different sources. For instance, the sidebar search contents may be web-based, e.g., from the Internet search service 106, or the results may be from a local network or data store such as from client computer system 102, or the results may be from a non-local, non-web-based network such as an enterprise-based, proprietary network database 122 or some other data store which the browser may be able to search.

In embodiments, the sidebar search pane 118 is a sub-element of the browser process associated with the tab 120. As a result, when the tab 120 is closed, the sidebar search pane 118 is likewise closed.

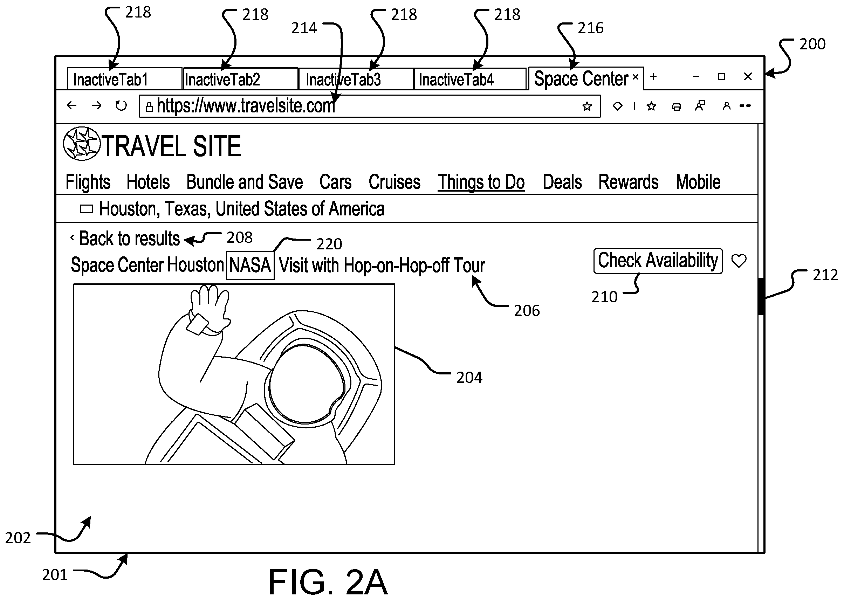

FIGs. 2A-2D further illustrate the many of the concepts described above showing an exemplary browser interface 200 having sidebar search functionality. FIG. 2A illustrates the primary browser pane 201 (also referred to as the primary web pane or primary content pane) prior to a request for a sidebar search. As shown, the primary browser pane 201 displays an exemplary web page 202 having exemplary content, such as image 204, text 206, navigation elements 208 and other hyperlinks 210. Other content may also be available to the user through scrolling, e.g., using scroll bar 212 or other known methods. In the specific example shown in FIG. 2A, the primary browser pane displays an exemplary "travelsite" web page, further showing information related to Houston Texas, and in particular, tour information for the Space Center in Houston. As will be appreciated, the exemplary content is for illustration purposes only, and those skilled in the art will recognize that many other exemplary sites could be used. Continuing with the example in FIG. 2A, user may navigate to this example page 202 through use of the address bar 214 or other known navigational methods. The exemplary browser 200 shown in FIG. 2A is known as a "tabbed" browser and includes tab 216, which is related to the primary content page 202, and potentially other tabs (e.g., inactive tabs 218) which may be open at the same time. Inactive tabs 218 relate to open content pages but where the focus is not currently on those pages, such that the tabs are referred to herein as in the background or "inactive." Exemplary content page 202 may further include various words (e.g., 220), topics, images (e.g., 204), videos or the like, that may be used as potential search parameters for a sidebar search, as discussed below.

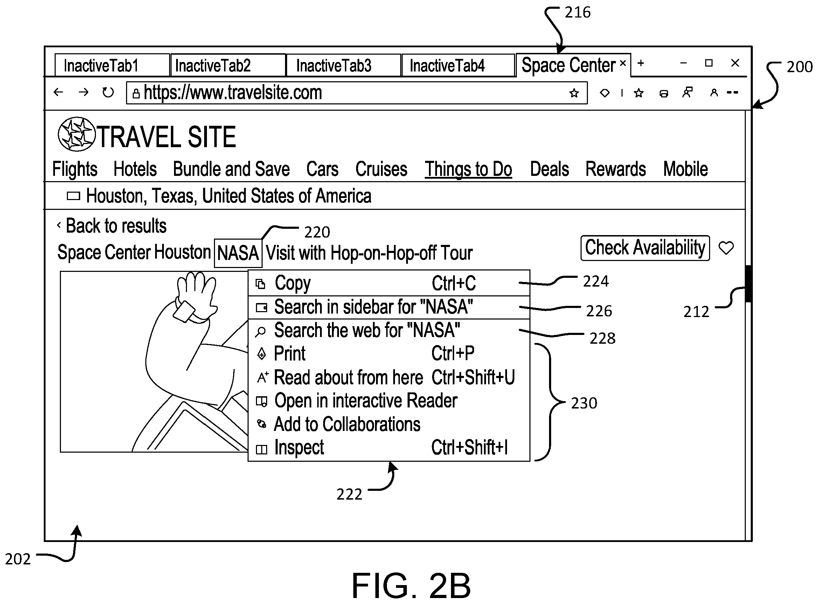

FIG. 2B illustrates the same browser interface 200 of FIG. 2A, with the same exemplary content page 202, further illustrating an aspect of the present disclosure for providing sidebar search option. In the embodiment shown in FIG. 2B, a context menu 222 is generated and displayed providing a user various options related to selected text or parameter 220. For instance, the menu 222 may provide the user the ability to copy the selected text by choosing option 224, search in sidebar by choosing option 226, or search for the topic in a separate tab or window by choosing option 228. Additionally, although not discussed in detail herein, those skilled in the art will appreciate that other menu options may exist, such as those shown in elements 230.

In the example shown in FIG. 2B, the user may have selected the word "NASA" 220 using known techniques, e.g., by highlighting the word using a mouse or other selector. Those skilled in the art will appreciate that there are many ways to select terms or text from certain web pages, e.g., using keystrokes, touch pads, touch screen interfaces, spoken input, etc. Next, the user right-clicks on the selected text to display the context menu of options. Again, those skilled in the art will appreciate there are other ways to trigger and cause the display of a basic context menu 222 such as the one depicted in FIG. 2B. With respect to embodiments discussed here, menu option 226 provides for the sidebar search functionality. One exemplary entry for this menu option is "Search in sidebar for 'NASA'" where "NASA" is the selected (highlighted) text or parameter 220. It will be appreciated that the menu language may differ, e.g., the language for using the sidebar search 226 function may alternatively suggest "Ask Bing for Information on NASA" to enable the Bing^{®} search service to fulfill the sidebar search request. Although not shown, an option may be provided to alternatively search enterprise data to fulfill the request.

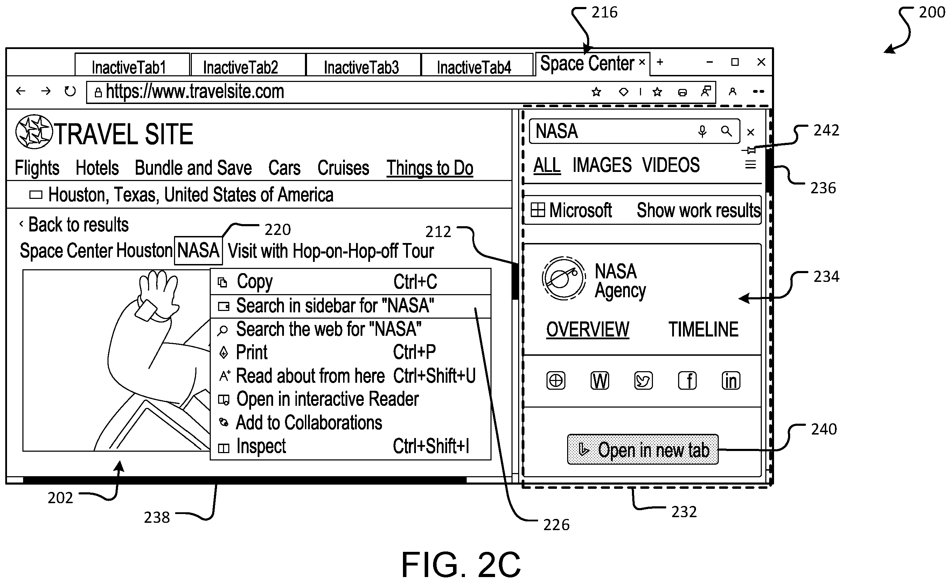

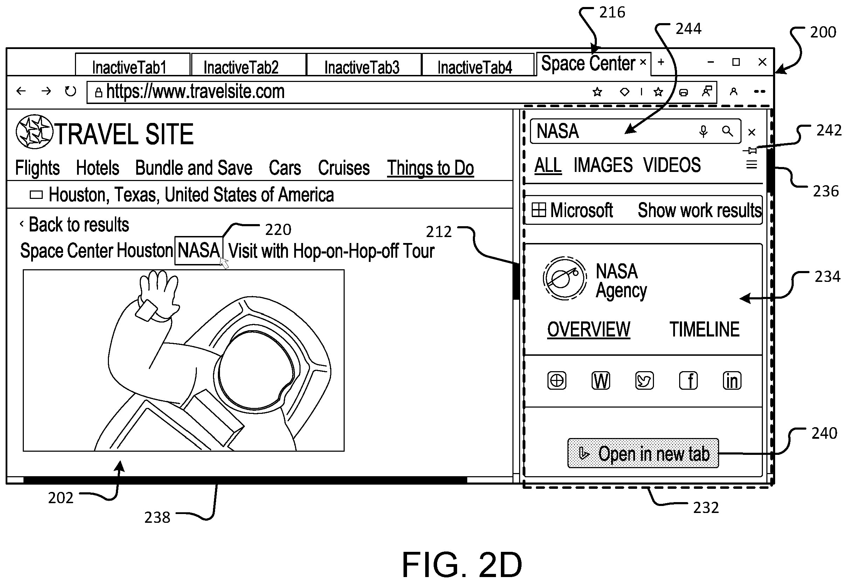

Upon user selection of the sidebar search option 226, the browser 200 causes the display of a sidebar search pane 232, shown in FIG. 2C (the context menu 222 with the sidebar search pane 232) and FIG. 2D (without the context menu 222). In the example provided, the browser 200 performs a search on the passed parameter 220, e.g., "NASA" and renders the results in the pane 232 alongside the primary browser pane 201. As shown in FIG. 2C, the scroll bar 212 for the primary browser pane 201 is re-rendered in a new location, e.g., moved towards the center of the browser display. Meanwhile, the scroll bar 212 allows the user to continue to navigate in the primary browser pane 201 while results 234 of the sidebar search are displayed in pane 232. Scroll bar control 236 allows the user to navigate/scroll through the results of the sidebar search pane 232 itself. The sidebar search pane 232 has a plurality of controls, and may have other content that is separately selectable as if it were its own browser pane.

Given that the sidebar search pane 232 is rendered alongside the primary search pane, and, in embodiments, the overall size of the browser window is not modified when conducting a sidebar search, the primary content pane 201 is re-framed and reduced in size. As a result, in most cases, less information is viewable (without scrolling) in the primary browser pane 202 once the sidebar search pane 232 is displayed or the viewable information is reduced in size to fit in the smaller pane. When the sidebar search pane 232 is closed, then, in embodiments, the primary content pane 201 is re-rendered with the new, larger size coordinates to effectively display more information than when the sidebar search pane 232 is open/viewable. While the FIGs. 2A-2D are not necessarily drawn to scale, it can be seen that less information is available in the primary search pane 202 when the sidebar search pane is open (e.g., the option to choose the "Deals", "Rewards", and "Mobile" and the "Check Availability" links have been hidden or removed from view). This re-rendering or redrawing provides the space to display the sidebar search pane 232. Some embodiments may re-render the page 202 such that information is re-drawn closer together when a sidebar search pane is displayed, or as shown in FIGS. 2C and 2D, the horizontal scroll bar 238 may also be provided to allow a user to scroll to view the otherwise hidden content.

As will be appreciated, prior to embodiments described herein, a user wanting more information on a topic, e.g., "NASA" 220 would have had to copy the text and navigate to a new browser window, with a new tab, to request and display information on that topic. With embodiments described herein, a user may be able to substantially maintain the view of the content page 202 and, in essence, continue the current web task, e.g., the task of researching city tours, while further researching "NASA" without navigating to another page.

In some cases the topic/parameter 202 is associated with a hyperlink. In such a case, if the user were to select the link in a conventional manner, e.g., using a left-click mouse operation, from a primary browser pane, the link is "opened" in a new tab or it replaces the current browser pane with the new information associated with the selected link. This default action is a fundamental aspect of navigating through various web sites on the Internet. However, in accordance with certain aspects of the present disclosure, if the user to were to alternatively select the hyperlink, e.g., using a right-click mouse operation, then an option to use the sidebar pane would be provided to the user. Should the user select the option, then a sidebar search pane, such as pane 232 shown in FIGS 2A-2D, renders the link contents provided therein. Alternatively, the sidebar search pane 232 provides search results of a search using terms from the text of the link as search terms.

The sidebar search pane 232, may, in some embodiments, be "pinned" by the user (e.g., by selecting pin control 242, as shown in FIGs 2C and 2D) or, in other cases the pane 232 may be pinned by default. When pinned, the pane 232 remains visible while the tab for the primary browser pane is open. In such embodiments, once pinned, the sidebar pane may remain until unpinned or closed. In other embodiments, once pinned, the sidebar search pane 232 remains available even when navigating between tabs. That is, when a user navigates to a different tab, e.g., one of the inactive tabs 218, and then returns to the tab 216, then the pane 232 will still be visible. In embodiments, the sidebar search pane 232 will not be visible while tab 218 is active since the pane 232 is contextual to the tab 216 (just as other content from the primary web page associated with tab 216 is not visible).

Each browser process has a layout key or map. Each map is essentially associated with one browser tab, e.g., tabs 216 and 218 (FIG 2A) and provides the layout information for the tab, address bar, primary content pane, etc. Per embodiments described herein, the layout maps for browser interface 200 further include an optional sidebar search pane for potential rendering. As a result, the sidebar search pane is, in essence, part of the primary content tab and can thus be displayed as long as the primary content page is displayed. Maintaining each sidebar search pane as part of the primary content tab, such as tab 216, allows for the sidebar search pane to show information relevant to the primary content page. Should the sidebar search pane 232 persist across multiple, unrelated tabs, then the contents of the sidebar search pane would show non-relevant results while viewing those other tabs. When the primary content page is closed and the tab is gone, then the sidebar search pane is closed along with it. In embodiments, the sidebar search pane involves a listener that listens for a close event on the primary tab. When such a close event is identified, the sidebar search pane closes as well.

In some embodiments, upon requesting the sidebar search, the focus is automatically placed on the rendered results, allowing the user to interact directly with the sidebar search pane without further navigation to the sidebar search pane. In other cases, the user may be required to navigate into the sidebar search pane to interact with it, e.g., scroll through the contents or select a different vertical option. In certain other cases, the sidebar search pane receives focus and remains active until the user selects outside of the sidebar search pane. Once the user selects outside of the sidebar search pane 232, it may close automatically if not pinned. In essence, in such cases, the sidebar search pane 232 is temporary and must be pinned if the user desires the sidebar search pane to remain visible while actively scrolling or browsing outside the sidebar search pane, e.g., in the primary content window.

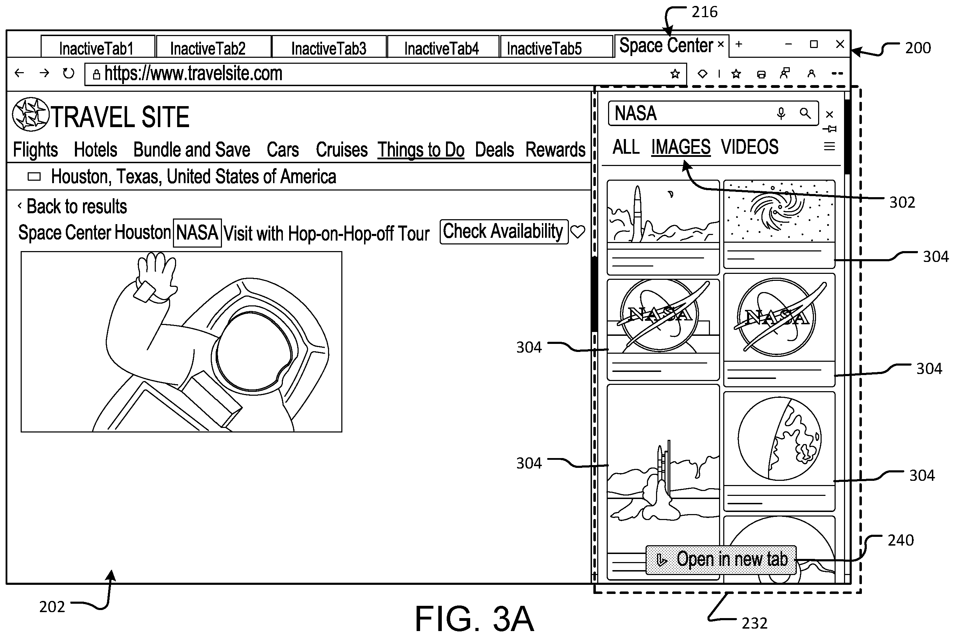

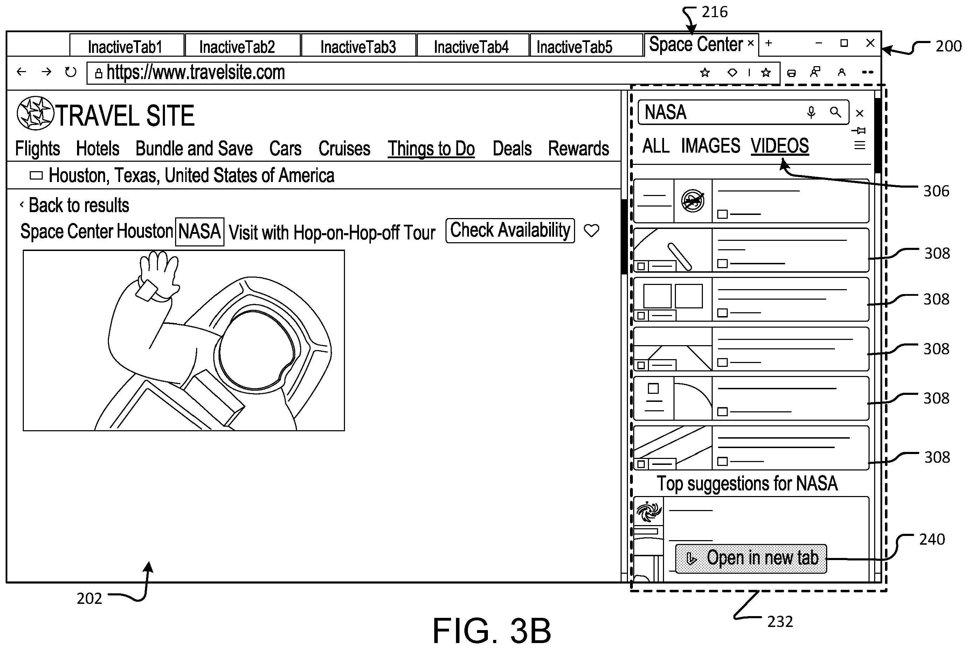

When navigating within the sidebar search pane 232, in some embodiments, selecting a hyperlink or other URL from within the sidebar search pane 232 will open a new tab in the tabbed browser 200. Other embodiments cause the result to be displayed in the sidebar search pane 232. FIG. 3A and FIG. 3B illustrate the latter situation. In these examples, the pane 232 includes other search options such as IMAGES 302 (FIG. 3A) and VIDEOS 306 (FIG. 3B). These options provide the user "vertical" search options, such that the user may search various verticals, e.g., images, videos, etc. Those skilled in the art will appreciate that many other verticals may be provided depending on the space available and/or the topic to be searched. For example, a sidebar search on "NASA" may result in selectable verticals such as ALL, IMAGES, and VIDEOS. As another example (not shown), a sidebar search on "current events" may result in other verticals, such as NEWS, while a sidebar search on "shoes" may result in a SHOPPING vertical option. In each of these cases, when selecting the vertical, e.g., 302, 306, etc., the contents of the sidebar search pane 232 are replaced with search results for that vertical, e.g., related images 304 when IMAGES 302 is selected or related videos 308 when VIDEOS 306 is selected.

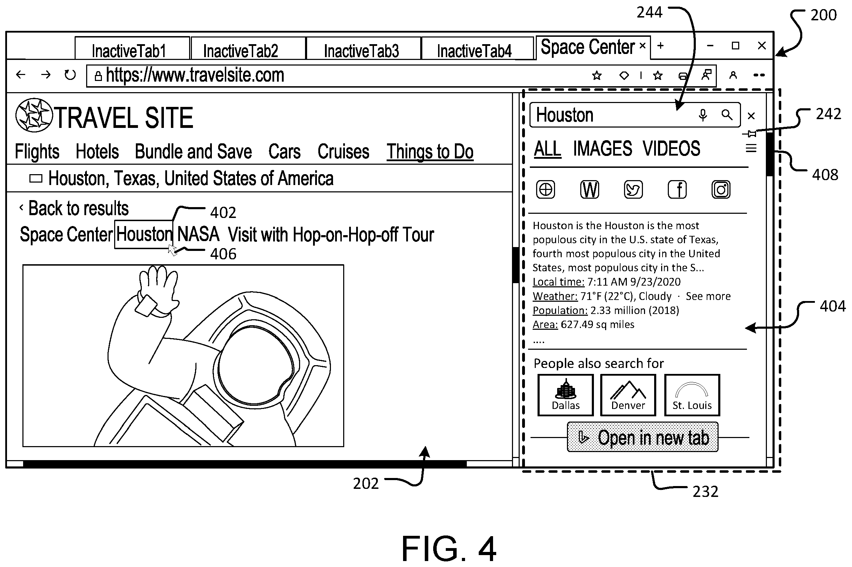

Once the sidebar search pane 232 is displayed, new or updated content may be rendered in the search pane 232 as depicted in FIG. 4. In essence, the sidebar search pane 232 further includes a search box 244 that not only provides the ability to see what sidebar search was conducted on, e.g., "NASA" in FIG. 2D, but also provides the ability for the user to input new search parameters to refine their search. In operation, the search box 244 is a search box control where the user can enter more and/or different search parameters and when selected, a refined sidebar search produces new or refined results. The new results of such a subsequent sidebar search are rendered in sidebar search pane 232 as is shown in FIG. 4, where the term "Houston" was entered in search box. Further, as may be appreciated from FIG. 4, the search parameter "Houston" may be typed in the search box 244 (using known methods), or the term may be searched by selecting the term from the primary web page 202. As shown, the term "Houston" is shown in the primary web page 202 at 402.

To refine or change the search, a similar process as described above in conjunction with FIGs. 2A-2D, with respect to the creation of the sidebar search pane 232 may be used. For instance, the user may right click on the term causing the display of a context menu where the sidebar search option is chosen to cause the resulting display of search results for "Houston." In alternative embodiments, once the sidebar search pane 232 is shown, the browser interface 200 may further provide for an automatic re-search or re-population of the sidebar search pane based on selecting the new term, e.g., "Houston". For instance, once the user, using the mouse pointer 406, highlights the term 402, the browser uses this selection as an indication to conduct a new sidebar search. The browser relays out the information to obtain new results and populates the sidebar search pane 232 with the new results 404. Given that the results are different, there may be scroll bar 408 may or may not be displayed. In some embodiments, the sidebar search pane 232 will need to be pinned using pin 410 to provide automatic repopulation of the sidebar search pane. Further, in this example, given that the primary content page 202 was already displayed alongside the sidebar search pane 232, the page 202 may not need to be re-rendered when re-populating the sidebar search pane 232.

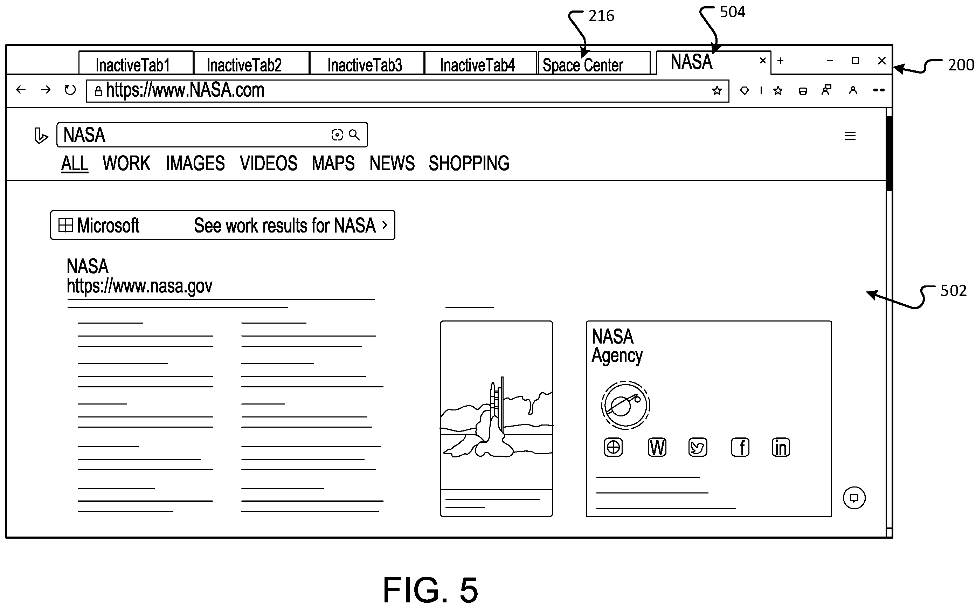

The sidebar search pane 232 further includes a control 240 ("Open in new tab" as shown in FIGs. 2C, 2D, 3A and 3B) that provides the ability to navigate to a new browser window 502 as shown in FIG. 5. In such a case, the browser open a new tab 504 and render the results of the search in an otherwise conventional manner. In the example depicted in FIG. 5, the results displayed in 502 are search results from the Bing^{®} search engine for the keyword "NASA", while other search engines may be used. Tab 216 remains open and the user may navigate back to the webpage in a conventional manner. As will be appreciated, since the area to display information the sidebar search pane 232 is smaller than the full web page 502, the amount (and potentially type) of information will be different in the sidebar search pane 232 as compared to the full web page 502. In essence, some options, e.g., some verticals and/or some navigation controls may not be presented to the user in the sidebar search pane 232 that would otherwise be presented in window 502.

In other embodiments, although not shown, the sidebar search request may relate to an image search. That is, instead of a user selecting a word or phrase from the primary page 202, a user may select an image. Once selected, the user may request a sidebar search on the image. In embodiments, the sidebar search on an image relates to a search for the image itself, and in other embodiments, the sidebar search on an image relates to a search on the contents of the image. In embodiments, the image search may work by extracting feature vectors from an image and searching for similar images that have a close cosine distance. In other embodiments, the image search may operate by detecting objects in the image and doing a textual search on those objects, or by looking for images that contain same kind of objects.

In particular embodiments, the sidebar search functionality can be used to search enterprise content. FIG. 6 illustrates this concept. Example page 600 is for a fictional company, "ABC Company" or "ABC" and the content of the page (which may be a public web page or a private, enterprise-only page) is an article drafted by a particular author. Should a user want to research the author, e.g., by selecting the text at 602, the user may conduct a sidebar search on that author. In this example however, the search is conducted on the company database or data store (such as data store 122 shown in FIG. 1) to provide internal results. Here, the results for that sidebar search are displayed in section 604. As in the other examples provided herein, once in the sidebar search pane, the user is able to separately scroll through the results and select portions within the results as if it were its own tab. In this particular example, the author may also want to conduct a broader, web-based search on the Internet for information on the author, and such functionality may also be provided to the user, typically through separate menu options (not shown).

While shown and described herein as having the sidebar search pane 232 on the right-hand side of the browser, it will be appreciated that other locations may also be used for the sidebar search pane. For instance, in some embodiments, where the language used is "right-to-left" or "RTL" then the sidebar search pane may be on the left side of the browser.

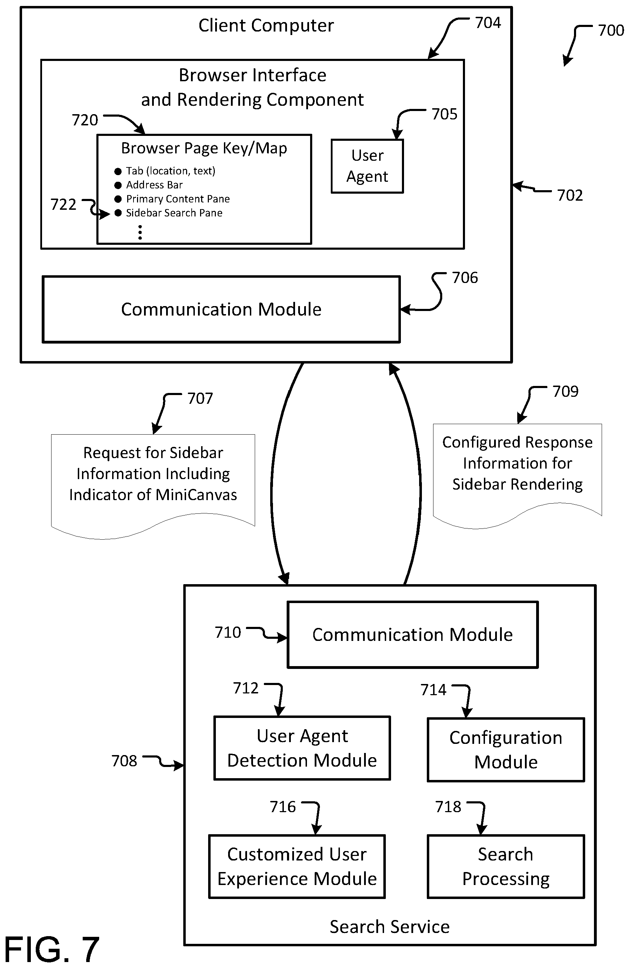

FIG 7 illustrates exemplary software components, in particular embodiments, related to client computer system 702 used to display a sidebar search pane. The client computer system 702 has a browser interface module 704, which represents the system module for providing the browser application to the user and providing interactions between the browser application and the computer system 702. The browser interface component further has a user agent 705. The browser interface component 704 communicates through communication module 706 with search service system 708. Communication module 706 receives requests for information from the browser interface module 704 and effectively communicates the request, such as request 707, to search service 708. Communication module further receives response information, such as response 709, from the service 708 and passes the same along to browser interface module for configuration and rendering to the user. Client computer 702 may include many other separate components in order to provide necessary functionality to a user, and those shown are merely illustrative of such functionality.

Search service 708 includes a communication module 710 for receiving and sending information from and to communication module 706 of client system 702. Further, search service 708 has a user agent detection module 712 that is used to determine what type of browser is sending the request. User agent detection module 712, in some cases may further detect what device and/or canvas the device may have available for rendering content. As discussed below, the user agent detection module 712 may simply utilize information sent in the request 707 to determine the size of the canvas for display, or, in some cases, the user agent detection module 712 may evaluate certain other metadata to determine such information. For instance, the user agent detection module 712 may evaluate metadata in the request to recognize the client system 702 is mobile phone and therefore may not have enough area to display a sidebar search pane.

Search service 708 further includes a configuration module for configuring responses according the particular request, e.g., with the amount of information necessary to satisfy a sidebar search query. Further, the service 708 may further include a customized user experience module 716. In essence, when a user agent is identified, either for normal rendering or for sidebar pane rendering, the search service can match that user agent type to a set of config files to better deliver tailored content to the user. Moreover, the sidebar search may benefit from the settings of the primary tab, e.g., any cookies or relevant settings, such as "safe search" or other security settings from the primary tab may be automatically applied, in embodiments, to the sidebar search request. In embodiments, the settings from the main tab are automatically applied to the sidebar search pane, e.g., those settings from the primary tab and web page are applied to the sidebar search contents as well. However, in certain cases, there is no real-time communication between the primary page and the sidebar search pane such that if the settings were modified for the main tab, the sidebar search pane would not automatically change its settings. Once a "refresh" occurred, then the new settings would be applied to the sidebar search pane. However, in other embodiments, a settings change may trigger a refresh to ensure the settings for both the primary page and sidebar search pane are aligned. Alternatively, an inter-process communication or communication protocol may be used between the primary page and the sidebar search pane to cause the appropriate change in settings for the sidebar search pane.

The search service 708 also includes a search processing module 718 which conducts the actual search associated with the particular parameter passed along with the request. It will be appreciated that the search processing module 718 may be a conventional search module or set of modules known to those skilled in the art. Once a search is conducted, the results from the search processing module 718 are provided to the configuration module for configuring the appropriate response to the sidebar search request.

Regarding the request 707, to conduct a sidebar search, the browser 704 sends a modified user agent in the request 707. The modified user agent indicates that the request is coming from an otherwise known browser, e.g., an Edge^{®} browser, but the modified user agent further indicates that search service should return results for rendering in the sidebar search pane. Thus, each request 707 for a sidebar search will include, in addition to the hint or parameter to be searched, but also information about the user agent, as well as an indication that the result is a sidebar search. As an example, if a sidebar search is requested, the request 707 may include the following information: "User-Agent: Mozilla/5.0 (Windows NT 10.0; Win64; x64) AppleWebKit/537.36 (KHTML, like Gecko) Chrome/ 82.0.4063.0 Safari/537.36 Edg/82.0.442.0 (MiniCanvas)". This information will enable the search service 708 to configure the response 709 for the sidebar search pane. Once recognized by the user agent detection module 712, the appropriate, configured response 709 can be returned to the client device 702. Those skilled in the art will appreciate that there are other ways to generate a request that has a sidebar search indicator therein, e.g., through the use of cookies, URL parameter flags or the like.

Once the response 709 is configured (which is discussed below) and returned, browser rendering component 704 renders the information in the sidebar search pane. The rendering component 704, in essence, reflows the page and establishes the boundaries for the primary content pane and the sidebar search pane. If required, new scroll controls will be added and the information is rendered to fit in each pane. This is done automatically, without further user input. That is, once the response is returned for the sidebar search pane, it is determined, by the browser, to structurally add the side pane as part of the primary tab. Since each tab will have a primary pane and sidebar pane capability as part of each layout map, then the browser is able to create the necessary boundaries for the new sidebar pane.

In embodiments, the browser interface manages a browser process or a browser page for each instantiated tab. Each browser page has a layout map or key 720. Each browser key 720 has various elements, e.g., those elements that manage the tab location and text, the address bar, etc. Further, in embodiments herein, each browser page has a sub-element dedicated to a sidebar search pane 722. Predefining the sub-element of the sidebar search pane for each browser instance allows for a straight-forward populating of the sidebar search pane when requested.

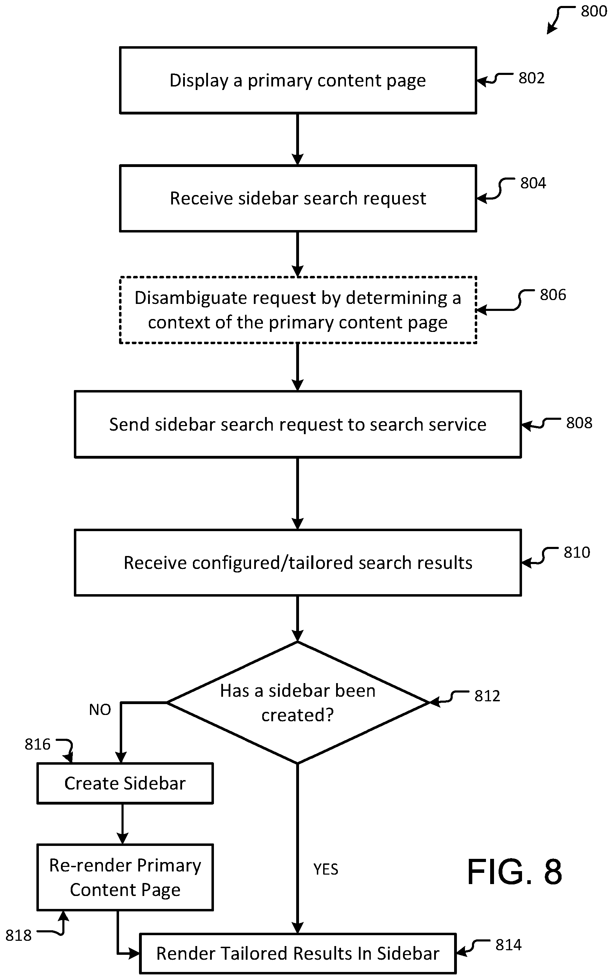

FIG 8 illustrates an overview of an example method 800 for requesting and receiving information for display in a sidebar search pane in accordance with examples of the present disclosure. In examples, aspects of the method 800 are performed by the client computer system, e.g., 102 (FIG. 1) or 702 (FIG. 7). The method 800 begins at operation 802, where a browser is simply displaying a primary content page.

Following display of the primary content page, receive operation 804 receives a request to perform a sidebar search. The request is received, e.g., from a user, where the request is a request to perform a search on particular information and display the results in a sidebar search pane. As will be appreciated, the sidebar search request that is received is typically initiated by a user, but other embodiments may involve the request being initiated by a bot or other module in the system 702. The request may be initiated by the user selecting a menu option or by using a default button option or other predetermined control.

As discussed above in conjunction with FIG. 7, the request includes a modified user agent according to particular embodiments. The modified user agent indicates to the search service that a sidebar search is being requested and thus allowing the search service the ability to tailor the response appropriately. Other unclaimed embodiments may provide the necessary information through other methods, e.g., using cookies, URL parameter flags, HTTP headers or the like.

Upon receipt of the sidebar search request, the request may go through an optional process of disambiguation by disambiguate operation 806. Embodiments may or may not utilize disambiguation operation 806 such that the box is shown in dashed lines. Disambiguation relates to situations where the sidebar search request may be for a word or phrase located in the primary content pane, but where the word or phrase may be ambiguous on its own, but may be less ambiguous given the context of the primary content pane. For example, if the primary content pane is for a golf-related web page, and the user requests a sidebar search on "Tiger", then it may be clear from the context that the user is requesting information related to the golfer named "Tiger Woods". However, if the primary content pane relates to search results for wild animals in Asia, then the context indicates that a sidebar search request on "Tiger" is more likely to be a request for information on tigers in general. Disambiguation is important given that the display area is small in the sidebar search pane, such that the user would rather not look through unrelated search results on an ambiguous term.

Disambiguation, in embodiments, involves an analysis of the primary content page to determine context. In one embodiment, the process looks at a category designation for the content page. If, for example, the category is sports or golf, then the sidebar search for "Tiger" will most likely be for the pro golfer. If the category designation for the page is animals, or Asia, then the request may be for tigers in general. In this case, the category is used to determine the context.

In other embodiments, the process analyzes the words around the search term to attempt to determine the context of the primary content page and thus provide the ability to disambiguate the selected search term. For example, the text immediately surrounding the word "Tiger" may include words such as "golf", "score", etc. Using this information the system is able to determine the search is likely for the pro golfer.

In other cases, the words around the selected search term or selected text may be used more generally to ensure the search is performed in the appropriate language. For instance, the selected text may be ambiguous as to which language of the primary content page. There are instances in many content pages where the language of the content page is one language, e.g., Japanese, yet select characters may be Chinese or another language. By evaluating text around the selected text, e.g., the paragraph wherein the selected text appears, the system is better able to determine the language of the content page. Using this information, the results can be returned in the appropriate language.

In other unclaimed embodiments, the search itself may include words around the search term essentially enabling the server to attempt to disambiguate the request.

In yet another embodiment, the disambiguation involves the analysis of a selected image to be searched. In one situation, the search may be for the image itself. In other cases, it may be determined that the user wants to conduct a search for the topic that is the subject of the image. For instance, a picture of Tiger Woods winning a specific golf tournament may be worthy of a search in and of itself. However, the system may decipher the contents of the image as containing a person, and that the person is Tiger Woods. As a result the system may alternatively conduct a sidebar search for information on Tiger Woods, which may or may not return the image that was selected. As in other situations of disambiguation, embodiments evaluate context for the searched parameter to help in disambiguation for image searches as well. Therefore a picture of someone playing a sport will return different image search results than that same person in an image with their family, as an example.

Once the search is disambiguated, e.g., by the client computer, or if no disambiguation is performed, then a search request is generated and sent to the search service, as shown by operation 808. The client computer system creates or generates the actual request for the search service by forming an otherwise customary request, but further including information that the results should be rendered in a mini canvas or a sidebar search pane.

The method 800 continues with receipt of the search results and configured information at operation 810. Operation 810 relates to the client computer system receiving, from the search service, the content from the search service that satisfies the initial request but is also in the proper form for presentation in the sidebar search pane.

Next, determination operation 812 determines if a sidebar search pane has already been created. If so, then flow branches YES and the method 800 concludes with the rendering operation 814, which renders the tailored search results in the sidebar search pane, e.g., pane 118 shown in FIG. 1. Certain examples discussed above illustrate the situation where the sidebar search pane has already been created such that the information only needs to be rendered in the sidebar search pane, e.g., the discussion with respect to FIGs. 3A, 3B and 4 illustrate such examples.

However, if, at determine operation 812 it is determined that the sidebar search pane has not been created then flow branches NO to creation operation 816 where the sidebar search pane is created. Next, re-render operation 818 re-renders or re-draws the primary pane to change its size, typically to make it smaller, and even more typically to shrink it horizontally.

Although described as a sidebar search pane, it is possible that the additional search pane could be drawn horizontally along the top or along the bottom of the primary pane. Also, it is possible that the sidebar search pane could be presented as a floating pane.

Those skilled in the art will appreciate that the operations shown and described in FIG. 8 may be performed in different orders, e.g., the browser application may create a sidebar search pane prior to sending or receiving tailored results to render in the sidebar search pane or the sidebar search pane contents may be rendered prior to the re-rendering of the primary content page. That said however, the flow 800 represents one contemplated embodiment of the operations performed in displaying the sidebar search contents.

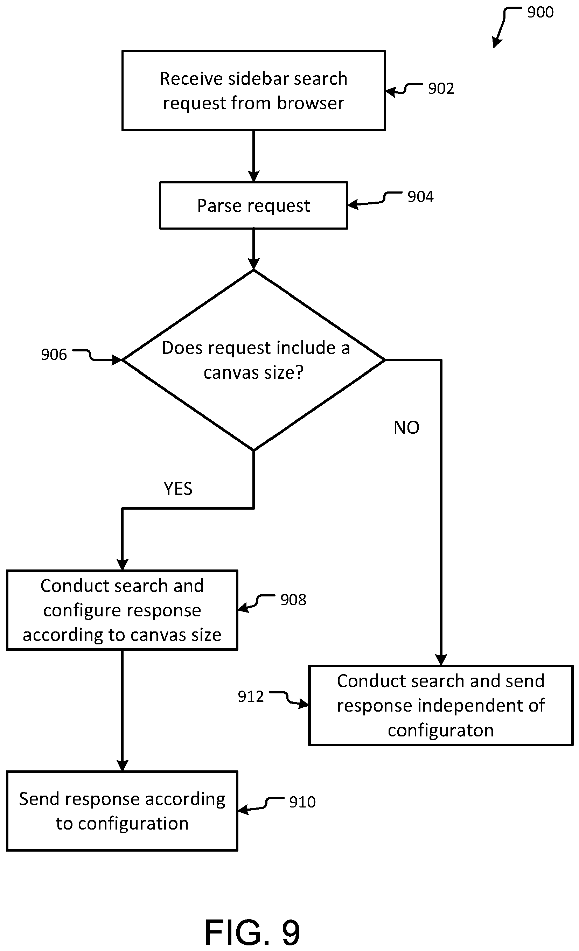

FIG. 9 illustrates method 900 for processing a request from a browser for a sidebar search. In embodiments, process or method 900 occurs at the search service, or on the server side. Initially, the method 900 begins with receive request 902 wherein a request is received, e.g., by the search service from the client computer system.

Parse operation 904 parses the request received at operation 902. Parsing the request relates to separating the request into at least two primary components, the parameter relating to the search and satisfying the search function, and the canvas size. The canvas size relates to whether the search results should be tailored or configured to fit within a smaller portion of the window or not. In some situations, if the canvas size is small, then some features, e.g., "weather", "sports", etc. will not be enabled because the user experience would be inadequate. However, the web results typically do not change based on canvas size since a search for information returns relevant information.

Determination operation 906 determines whether the parsed information includes a size of canvas indicator. In some embodiments, the request will provide information indicating that the results should be configured according to a particular canvas size, such as for a mini canvas or sidebar search pane. The client may send this information in a cookie, an HTTP header, URL parameters, a user agent header, etc. Determination operation 906 evaluates the request and determines the requested size. If the size sent is unclear, determine operation 908 may infer a default "mini" size. When a size indicator has been identified or inferred, then flow branches "YES" to conduct search and configure operation 908. Operation 908 performs the necessary search and configures the results to the size indicated in the request. Following configure operation 908 sends the configured response to the user.

If determination operation determines that the request does not include a canvas size, then flow branches "NO" to conduct search and send operation 912. Operation 912 performs the necessary search on the request from the user and sends the response back independent of configuration.

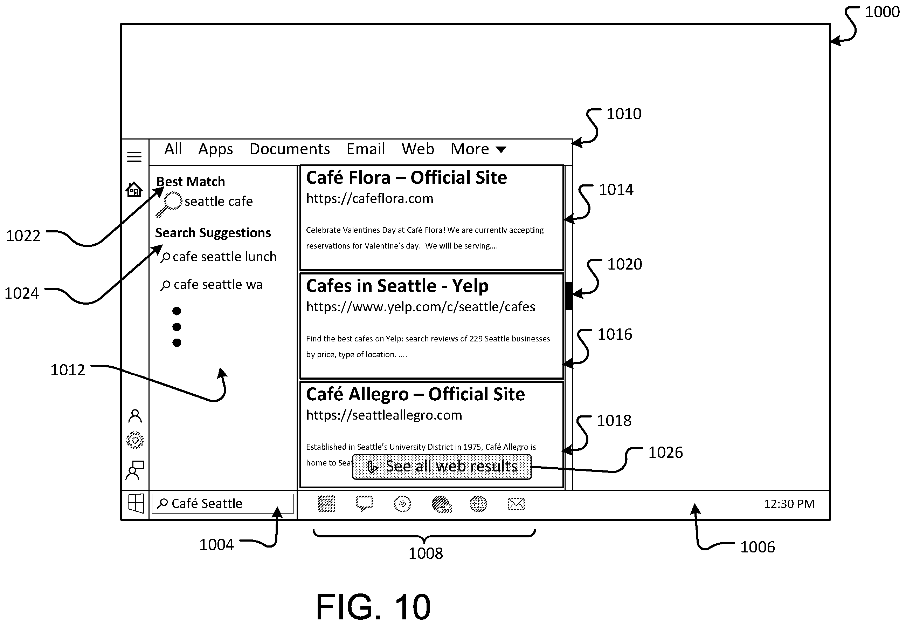

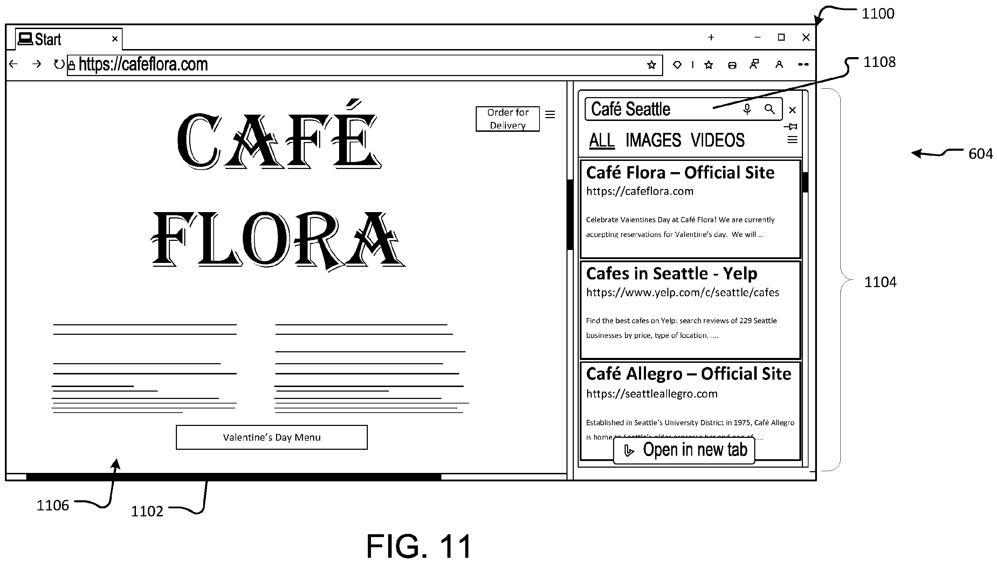

FIGs. 10 and 11 relate to another use case of the sidebar search pane. FIG. 10 shows a search request/response in an operating-system-search environment 1000. The results of the search can ultimately be rendered in a browser 1100, showing a primary content page 1102 and sidebar search results 1104 as shown in FIG. 11.

More specifically, the search box 1002 (FIG. 10) is configured to receive user input for a search even though it is not part of a browser application. In this example, the search box 1002 is exemplary of a search from a non-browser application, such as part of an operating system task bar 1006. The exemplary search box 1002 is one control on the task bar 1006, where the task bar may include other controls, icons or links 1008. As will be appreciated, when the search is requested, e.g., following data entry, the non-browser application performs a search. In some embodiments, the system automatically searches for local results and provides a web-based search as well. In this example, the system 1000 provides a pop-up or cascading user interface 1010 that includes a plurality of search tips 1012 and a plurality of results, in a mini search engine results page (miniserp), that satisfy the search request, e.g., 1014, 1016 and 1018. In some cases, the interface 1010 also provides a scroll bar 1020 enabling the user to scroll through even more results from the search. In an embodiment, the search tips area 1012 includes an indication of the best match 1022. Further, the search tips area 1012 may also provide the user guidance as to various other search suggestions 1024..

From interface 1010, a user may select one of the various links, e.g., one of the tips such as "Best Match" 1022, or one of the result items 1014, 1016 or 1018. Upon selection, a default browser is instance is started and the browser populates the primary browser pane with the chosen result item. For instance, if the user selects Best Match for "seattle café", then the browser will cause search results to be displayed in a browser interface for the "seattle café" as if the user entered the search terms into the browser itself. Similarly, if the user selects control 1026, then all search results are displayed in a browser primary content pane.

However, if the user selects Café Flora 1014, then the browser will display the third-party website for Café Flora, and, in accordance with embodiments herein, the remaining results in a sidebar search pane. Thus, when the third-party site 1014 is selected, a browser window is launched and the third-party site is the primary content pane and the remaining results are displayed in a sidebar search pane, as shown in FIG. 11. In an embodiment, a new search request is sent to the search service to provide the content for the third-party site along with a search request for the tailored results for the sidebar search pane. Other embodiments are contemplated whereby the initial display does not require a request to the search service to display the third-party site along side the sidebar search pane. Also, those skilled in the art will appreciate that the user need not choose a third-party site for the sidebar search pane to be generated. That is, the user may select another result from the mini search results page, which will launch the browser window, and the remaining results will be displayed in a sidebar search pane alongside the primary content page displaying the chosen result.

Those skilled in the art will appreciate that the browser user interface 1100 is shown independent of the operating system interface 1000 shown in FIG. 10. The task bar 1006 and related controls 1008 are omitted in FIG. 11 in order to show the results as they are displayed in the browser user interface 1100. Further, in an embodiment, the sidebar search results 1104 are the search results from the search requested in the search box 1004, however, since the primary content pane 1002 will display one such search result 1006, it is possible that that search result 1006 could be removed from the display 1104. The sidebar search pane 1104 further includes a search box 1108, which allows the user to see what search was conducted and further provides the user the capability to refine the search if desired. Other features of the sidebar search pane 232 described above may also incorporated into the sidebar search pane 1104, such as the "Open in new tab" control, among others.

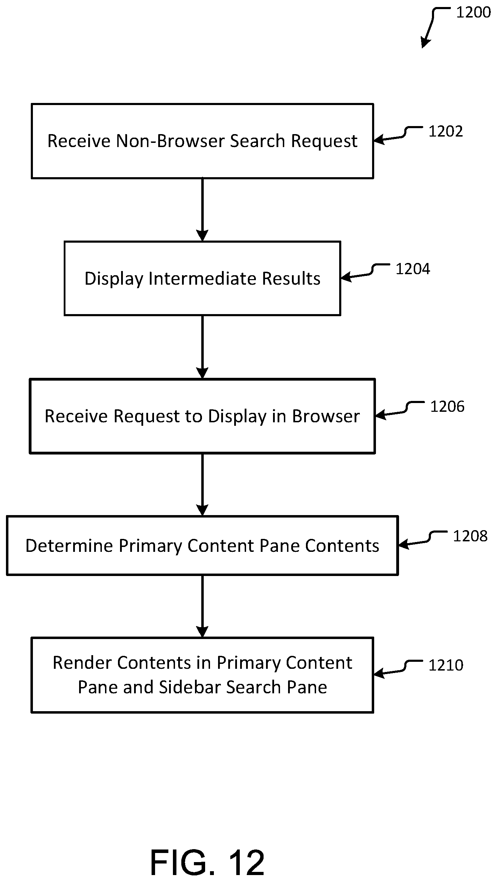

FIG. 12 illustrates an overview of an example method 1200 for requesting and receiving information for display in a sidebar search pane in accordance with examples shown and described in conjunction with FIGs. 10 and 11. In examples, aspects of the method 1200 are performed by the client computer system, e.g., 102 (FIG. 1) or 702 (FIG. 7). The method 1200 begins at operation 1202, where a request is received, e.g., from a user, to perform a search. The request received in operation 1202 is a non-browser application search request. In examples, the search entry could be from a task-bar or another application having some search functionality.

In embodiments, the method 1200 continues with a display operation 1204 of displaying intermediate results. Displaying intermediate results relates to displaying some information to the user as to various results from the search, such as the display 1010 shown in FIG. 10. Given that the search request is entered in a non-browser interface, the results may or may not be web-based results. In the situation where there are web-based results, the method may flow to request operation 1206. Operation 1206 receives a request to display or show all the web results. The request is interpreted as a request to launch a browser instance and display the search results therein.

Following receive operation 1206, determine operation 1208 determines the primary content page to display in the primary content pane. For instance, upon selecting control 1024 (FIG. 10) the method determines that "Café Flora" or "https://cafeflora.com" is the best search result and will display this website in the primary content pane. In embodiments, the system chooses the top most item on the list. Other methods may be used to select the primary content page for display, e.g., many ranking algorithms may be implemented to decide the most relevant or the most popular response for display.

Following the determination of the primary content page to be displayed, method 1200 then renders the contents in render operation 1210. Render operation 1210 renders the primary content page (e.g., 1106) in primary content pane (e.g., 1102) alongside a sidebar search pane (e.g., 1104). In embodiments, the results in the sidebar search pane 1104 include the results from the previously conducted search performed using the non-browser related search function. In other embodiments, the sidebar search pane 1104 may include other results based on a new search conducted as a result of the selection of the control 1024.

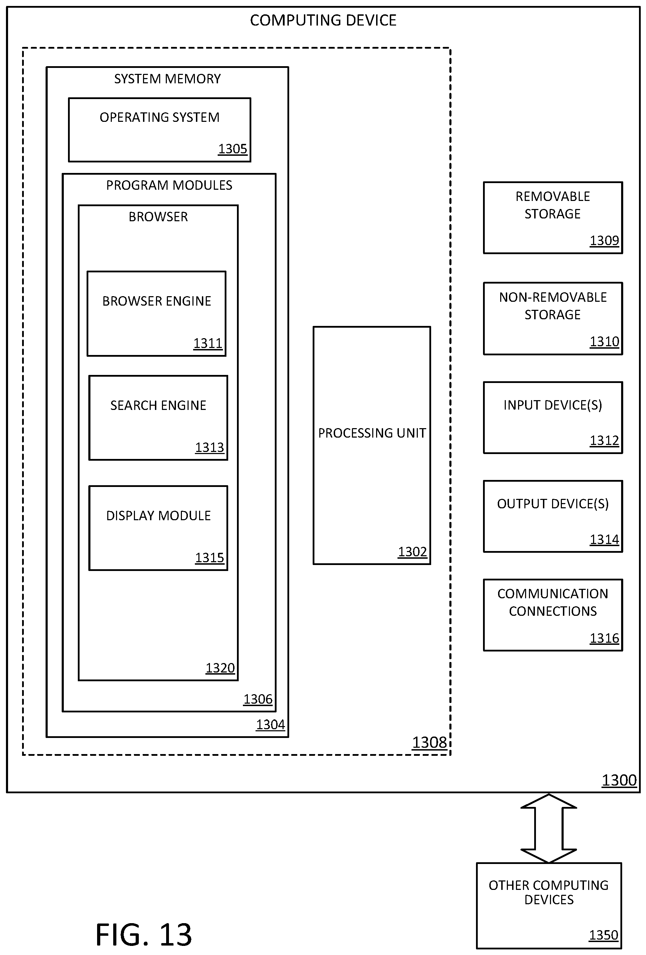

FIG. 13 is a block diagram illustrating physical components (e.g., hardware) of a computing device 1300 with which aspects of the disclosure may be practiced. The computing device components described below may have computer executable instructions for displaying search results in a sidebar portion of browser application, on a client computing device, including computer executable instructions for browser application 1320 that can be executed to employ the methods disclosed herein. In a basic configuration, the computing device 1300 may include at least one processing unit 1302 and a system memory 1304. Depending on the configuration and type of computing device, the system memory 1304 may comprise, but is not limited to, volatile storage (e.g., random access memory), non-volatile storage (e.g., read-only memory), flash memory, or any combination of such memories. The system memory 1304 may include an operating system 1305 and one or more program modules 1306 suitable for searching and displaying results in browser 1320, such as one or more components in regards to FIG. 7 and, in particular, browser engine 1311, search engine 1313, and display module 1315. The operating system 1305, for example, may be suitable for controlling the operation of the computing device 1300. Furthermore, aspects of the disclosure may be practiced in conjunction with a graphics library, other operating systems, or any other application program and is not limited to any particular application or system. This basic configuration is illustrated in FIG. 13 by those components within a dashed line 1308. The computing device 1300 may have additional features or functionality. For example, the computing device 1300 may also include additional data storage devices (removable and/or non-removable) such as, for example, magnetic disks, optical disks, or tape. Such additional storage is illustrated in FIG. 13 by a removable storage device 1309 and a non-removable storage device 1310.

As stated above, a number of program modules and data files may be stored in the system memory 1304. While executing on the processing unit 1302, the program modules 1306 (e.g., browser application 1320) may perform processes including, but not limited to, the aspects, as described herein.

Furthermore, aspects of the disclosure may be practiced in an electrical circuit comprising discrete electronic elements, packaged or integrated electronic chips containing logic gates, a circuit utilizing a microprocessor, or on a single chip containing electronic elements or microprocessors. For example, aspects of the disclosure may be practiced via a system-on-a-chip (SOC) where each or many of the components illustrated in FIG. 13 may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein, with respect to the capability of client to switch protocols may be operated via application-specific logic integrated with other components of the computing device 1300 on the single integrated circuit (chip). Aspects of the disclosure may also be practiced using other technologies capable of performing logical operations such as, for example, AND, OR, and NOT, including but not limited to mechanical, optical, fluidic, and quantum technologies. In addition, aspects of the disclosure may be practiced within a general purpose computer or in any other circuits or systems.

The computing device 1300 may also have one or more input device(s) 1312 such as a keyboard, a mouse, a pen, a sound or voice input device, a touch or swipe input device, etc. The output device(s) 1314 such as a display, speakers, a printer, etc. may also be included. The aforementioned devices are examples and others may be used. The computing device 1300 may include one or more communication connections 1316 allowing communications with other computing devices 1350. Examples of suitable communication connections 1316 include, but are not limited to, radio frequency (RF) transmitter, receiver, and/or transceiver circuitry; universal serial bus (USB), parallel, and/or serial ports.

The term computer readable media as used herein may include computer storage media. Computer storage media may include volatile and nonvolatile, removable and non-removable media implemented in any method or technology for storage of information, such as computer readable instructions, data structures, or program modules. The system memory 1304, the removable storage device 1309, and the non-removable storage device 1310 are all computer storage media examples (e.g., memory storage). Computer storage media may include RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information and which can be accessed by the computing device 1300. Any such computer storage media may be part of the computing device 1300. Computer storage media does not include a carrier wave or other propagated or modulated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless media.

The different aspects described herein may be employed using software, hardware, or a combination of software and hardware to implement and perform the systems and methods disclosed herein. Although specific devices have been recited throughout the disclosure as performing specific functions, one of skill in the art will appreciate that these devices are provided for illustrative purposes, and other devices may be employed to perform the functionality disclosed herein without departing from the scope of the disclosure.

As stated above, a number of program modules and data files may be stored in the system memory 1304. While executing on processing unit 1302, program modules (e.g., applications, Input/Output (I/O) management, and other utilities) may perform processes including, but not limited to, one or more of the stages of the operational methods described herein such as methods 800, 900 and 1200 illustrated in FIG. 8, FIG. 9 and FIG. 12, for example.

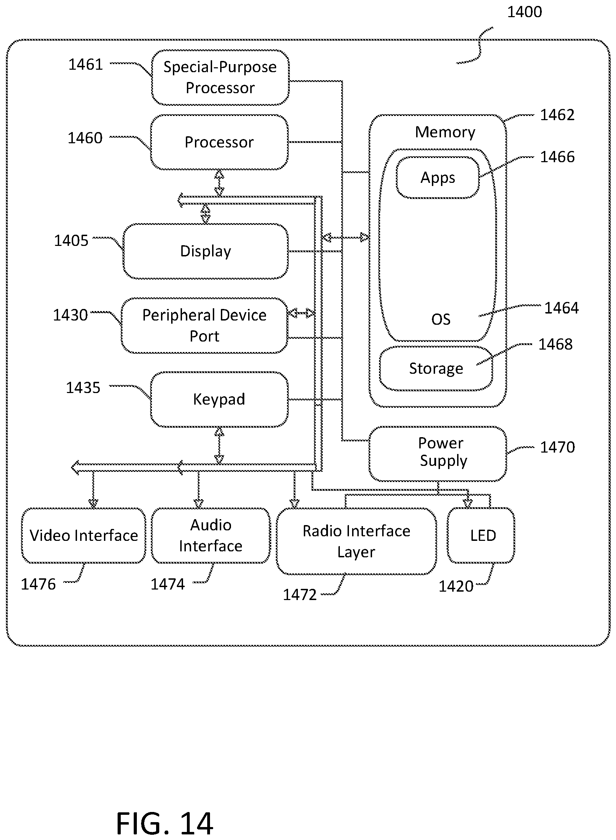

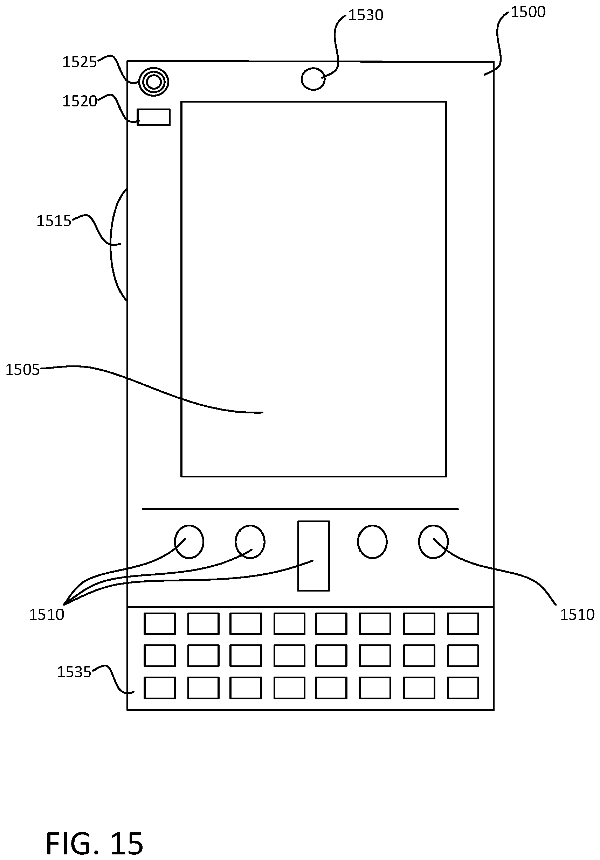

FIG. 14 and FIG. 15 illustrate computing device 1400, for example, personal computer, a tablet personal computer, a laptop computer, a mobile telephone, a smart phone and the like, with which aspects of the disclosure may be practiced.

FIG. 14 is a block diagram illustrating the architecture of one aspect of a computing device 1400. That is, the computing device 1400 can incorporate a system or an architecture to implement some aspects of the disclosure. In one aspect, the system 1400 is implemented as a tablet computer system capable of running one or more applications (e.g., browser, e-mail, calendaring, contact managers, messaging clients, games, and media clients/players). In some aspects, the system 1400 is integrated with other devices, such as an integrated personal digital assistant (PDA) and a wireless phone.

One or more application programs 1466 may be loaded into the memory 1462 and run on or in association with the operating system 1464. Examples of the application programs include phone dialer programs, e-mail programs, personal information management (PIM) programs, word processing programs, spreadsheet programs, Internet browser programs, messaging programs, diagramming applications, and so forth. The system 1400 also includes a non-volatile storage area 1468 within the memory 1462. The non-volatile storage area 1468 may be used to store persistent information that should not be lost if the system 1400 is powered down. The application programs 1466 may use and store information in the non-volatile storage area 1468, such as e-mail or other messages used by an e-mail application, and the like. A synchronization application (not shown) also resides on the system 1400 and is programmed to interact with a corresponding synchronization application resident on a host computer to keep the information stored in the non-volatile storage area 1468 synchronized with corresponding information stored in the host computer. As should be appreciated, other applications may be loaded into the memory 1462 and run on the computing device 1400, including steps and methods of displaying a primary content pane, receiving a search request for a sidebar search, preparing and sending the request to a search service, and rendering the results in a sidebar search pane.

The system 1400 has a power supply 1470, which may be implemented as one or more batteries. The power supply 1470 might further include an external power source, such as an AC adapter or a powered docking cradle that supplements or recharges the batteries.

The system 1400 may also include a radio 1472 that performs the functions of transmitting and receiving radio frequency communications. The radio 1472 facilitates wireless connectivity between the system 1400 and the "outside world," via a communications carrier or service provider. Transmissions to and from the radio 1472 are conducted under control of the operating system 1464. Communications received by the radio 1472 may be disseminated to the application programs 1466 via the operating system 1464, and vice versa. The radio 1472 allows the system 1400 to communicate with other computing devices such as over a network. The radio 1472 is one example of communication media.

Computing device 1400 may have additional features or functionality. For example, the mobile computing device 1400 may also include additional data storage devices (removable and/or non-removable) such as, magnetic disks, optical disks, or tape. Such additional storage is illustrated in FIG. 14 by the non-volatile storage area 1468.

Data/information generated or captured by the computing device 1400 and stored via the memory 1462 may be stored locally on the computing device 1400, as described above, or the data may be stored on any number of storage media that may be accessed by the device via the radio 1472 or via a wired connection between the computing device 1400 and a separate computing device associated with the mobile computing device 1400, for example, a server computer in a distributed computing network, such as the Internet. As should be appreciated such data/information may be accessed via the computing device 1400 via the radio 1472 or via a distributed computing network. Similarly, such data/information may be readily transferred between computing devices for storage and use according to well-known data/information transfer and storage means, including electronic mail and collaborative data/information sharing systems.

One of skill in the art will appreciate that the scale of systems such as system 1400 may vary and may include more or fewer components than those described in FIG. 14. In some examples, interfacing between components of the system 1400 may occur remotely, for example where components of system 1400 may be spread across one or more devices of a distributed network. In examples, one or more data stores/storages or other memory are associated with system 1400. For example, a component of system 1400 may have one or more data storages/memories/stores associated therewith. Data associated with a component of system 1400 may be stored thereon as well as processing operations/instructions executed by a component of system 1400.

With reference to FIG. 15, an exemplary computing device 1500 for implementing the aspects is illustrated. In a basic configuration, the computing device 1500 is a handheld computer or tablet computer having both input elements and output elements. The mobile computing device 1500 typically includes a display 1505 and one or more input buttons 1510 that allow the user to enter information into the computing device 1500. The display 1505 of the computing device 1500 may also function as an input device (e.g., a touch screen display). If included, an optional side input element 1515 allows further user input. The side input element 1515 may be a rotary switch, a button, or any other type of manual input element. In alternative aspects, computing device 1500 may incorporate more or less input elements. For example, the display 1505 may not be a touch screen in some aspects. In yet another alternative aspect, the computing device 1500 is a portable phone system, such as a cellular phone. The computing device 1500 may also include an optional keypad 1535. Optional keypad 1535 may be a physical keypad or a "soft" keypad generated on the touch screen display. In various aspects, the output elements include the display 1205 for showing a graphical user interface (GUI), a visual indicator 1520 (e.g., a light emitting diode) and/or an audio transducer 1525 (e.g., a speaker). In some aspects, the mobile computing device 1200 incorporates a vibration transducer for providing the user with tactile feedback. In yet another aspect, the mobile computing device 1500 incorporates input and/or output ports, such as an audio input (e.g., a microphone jack), an audio output (e.g., a headphone jack), and a video output (e.g., an HDMI port) for sending signals to or receiving signals from an external device. In aspects, the word processing application may be displayed on the display 1505.

Reference has been made throughout this specification to "one example" or "an example," meaning that a particular described feature, structure, or characteristic is included in at least one example. Thus, usage of such phrases may refer to more than just one example. Furthermore, the described features, structures, or characteristics may be combined in any suitable manner in one or more examples.

One skilled in the relevant art may recognize, however, that the examples may be practiced without one or more of the specific details, or with other methods, resources, materials, etc. In other instances, well known structures, resources, or operations have not been shown or described in detail merely to observe obscuring aspects of the examples.

While examples and applications have been illustrated and described, it is to be understood that the examples are not limited to the precise configuration and resources described above. The scope of the invention is determined by the appended claims.

## Claims

1. A computer-implemented method for performing operations on a graphical user interface, comprising:
displaying, in a browser application, a primary content page having first dimensions;
receiving selected text within the primary content page to be sidebar searched;
receiving a request to perform a sidebar search based on the selected text;
sending a sidebar search request to a search service for processing, the sidebar search request comprising, in addition to the selected text to be searched, a modified user agent indicating that the request is coming from an otherwise known browser and indicating that a search service should return results for rendering in a sidebar search pane;
responsive to the sidebar search request, receiving tailored results from the search service for display in the sidebar search pane, wherein the modified user agent enables the search service to configure the response for the sidebar search pane;
in response to receiving the tailored results, displaying, in the browser application, the tailored results from the search in the sidebar search pane; and
re-rendering the primary content page within second dimensions alongside the sidebar search pane, wherein the second dimensions are smaller than the first dimensions,
wherein the browser is a tabbed browser and the primary content page and sidebar search pane share the same tab;
wherein the sidebar search pane includes a plurality of controls, wherein at least two of the controls include a search box for refining the sidebar search results and a search in tab control for launching a new tab request, wherein the method further comprises:
receiving user input of a search parameter to the search box control;
on selection of the search box control, performing a subsequent sidebar search, producing new results; and
rendering the new results of the subsequent sidebar search in the sidebar search pane.

2. The computer-implemented method of claim 1 wherein the tailored results include a plurality of vertical search options for refining the contents of the sidebar search pane.

3. The computer-implemented method of claim 1 further comprising disambiguating the sidebar search request.

4. The computer-implemented method of claim 3 wherein the disambiguating comprises:
determining a context of the primary content page, wherein the context is one of: language, category or image.

5. The computer-implemented method of claim 1 wherein the primary content page and the sidebar search pane is closed on selection of a close tab control.

6. A computer readable medium storing computer-executable instructions that when executed by a processor cause a computer system to:
display, in a browser application, a primary content page having first dimensions; receive selected text within the primary content page to be sidebar searched;
receive a request to perform a sidebar search based on the selected text;
send a sidebar search request to a search service for processing, the sidebar search request comprising, in addition to the selected text to be searched, a modified user agent indicating that the request is coming from an otherwise known browser and indicating that a search service should return results for rendering in a sidebar search pane;
responsive to the sidebar search request, receive tailored results from the search service for display in the sidebar search pane, wherein the modified user agent enables the search service to configure the response for the sidebar search pane;
in response to receiving the tailored results, display, in the browser application, the tailored results from the search in the sidebar search pane; and
re-render the primary content page within second dimensions alongside the sidebar search pane, wherein the second dimensions are smaller than the first dimensions,
wherein the browser is a tabbed browser and the primary content page and sidebar search pane share the same tab,
wherein the sidebar search pane includes a plurality of controls, wherein at least two of the controls include a search box for refining the sidebar search results and a search in tab control for launching a new tab request, and the instructions when executed cause the computer system to:
receive user input of a search parameter to the search box control;
on selection of the search box control, perform a subsequent sidebar search, producing new results; and
render the new results of the subsequent sidebar search in the sidebar search pane.

7. The computer readable medium of claim 6 further causing the processor to disambiguate the sidebar search request.

8. The computer readable medium of claim 7, wherein the disambiguate operation further comprises:
determining a context of the primary content page, wherein the context is one of: language, category or image.

9. The computer readable medium of claim 6, wherein the primary content page and the sidebar search pane is closed on selection of a close tab control.

10. A system for displaying a sidebar search pane, the system comprising:
a processor; and
a memory storing executable instructions that when executed by the processor cause the system to perform a method in accordance with any of claims 1-5.

11. The system of claim 10 wherein the search service comprises an enterprise data search service.

## Patentansprüche

1. Computerimplementiertes Verfahren zum Durchführen von Vorgängen an einer grafischen Benutzeroberfläche, umfassend:
Anzeigen einer Hauptinhaltsseite mit ersten Abmessungen in einer Browseranwendung;
Empfangen von innerhalb der Hauptinhaltsseite ausgewähltem Text, der mittels einer Seitenleistensuche durchsucht werden soll;
Empfangen einer Anfrage zum Durchführen einer Seitenleistensuche basierend auf dem ausgewählten Text;
Senden einer Seitenleistensuchanfrage zur Verarbeitung an einen Suchdienst, die Seitenleistensuchanfrage umfassend zusätzlich zu dem zu durchsuchenden ausgewählten Text einen modifizierten Benutzeragent, der angibt, dass die Anfrage von einem ansonsten bekannten Browser stammt, und der angibt, dass ein Suchdienst Ergebnisse zum Wiedergeben in einem Seitenleistensuchbereich zurückgeben soll;
Empfangen maßgeschneiderter Ergebnisse vom Suchdienst zur Anzeige im Seitenleistensuchbereich als Reaktion auf die Seitenleistensuchanfrage, wobei der modifizierte Benutzeragent es dem Suchdienst ermöglicht, die Antwort für den Seitenleistensuchbereich zu konfigurieren;
Anzeigen der maßgeschneiderten Suchergebnisse aus der Suche im Seitenleistensuchbereich als Reaktion auf das Empfangen der maßgeschneiderten Suchergebnisse; und
erneutes Wiedergeben der Hauptinhaltsseite innerhalb zweiter Abmessungen neben dem Seitenleistensuchbereich, wobei die zweiten Abmessungen kleiner als die ersten Abmessungen sind,
wobei es sich bei dem Browser um einen Browser mit Registerkarten handelt und die Hauptinhaltsseite sowie der Seitenleistensuchbereich dieselbe Registerkarte teilen;
wobei der Seitenleistensuchbereich eine Vielzahl von Steuerelementen beinhaltet, wobei mindestens zwei der Steuerelemente ein Suchfeld zum Verfeinern der Seitenleistensuchergebnisse und ein Suchsteuerelement zum Starten einer neuen Registerkartenanfrage beinhalten, wobei das Verfahren ferner Folgendes umfasst:
Empfangen einer Benutzereingabe eines Suchparameters in das Suchfeldsteuerelement;
Durchführen einer nachfolgenden Seitenleistensuche bei Auswahl des Suchfeldsteuerelements, wodurch neue Ergebnisse erzeugt werden; und
Wiedergeben der neuen Ergebnisse der nachfolgenden Seitenleistensuche im Seitenleistensuchbereich.

2. Computerimplementiertes Verfahren nach Anspruch 1, wobei die maßgeschneiderten Ergebnisse eine Vielzahl vertikaler Suchoptionen zum Verfeinern des Inhalts des Seitenleistensuchbereichs beinhalten.

3. Computerimplementiertes Verfahren nach Anspruch 1, ferner umfassend das Auflösen von Mehrdeutigkeiten bei der Seitenleistensuchanfrage.

4. Computerimplementiertes Verfahren nach Anspruch 3, wobei das Auflösen von Mehrdeutigkeiten Folgendes umfasst:
Bestimmen eines Kontexts der Hauptinhaltsseite, wobei der Kontext einer der folgenden ist: Sprache, Kategorie oder Bild.

5. Computerimplementiertes Verfahren nach Anspruch 1, wobei die Hauptinhaltsseite und der Seitenleistensuchbereich bei Auswahl eines Steuerelements zum Schließen der Registerkarte geschlossen werden.

6. Computerlesbares Medium, auf dem computerausführbare Anweisungen gespeichert sind, die bei Ausführung durch einen Prozessor ein Computersystem zu Folgendem veranlassen:
Anzeigen einer Hauptinhaltsseite mit ersten Abmessungen in einer Browseranwendung; Empfangen von innerhalb der Hauptinhaltsseite ausgewähltem Text, der mittels einer Seitenleistensuche durchsucht werden soll;
Empfangen einer Anfrage zum Durchführen einer Seitenleistensuche basierend auf dem ausgewählten Text;
Senden einer Seitenleistensuchanfrage zur Verarbeitung an einen Suchdienst, die Seitenleistensuchanfrage umfassend zusätzlich zu dem zu durchsuchenden ausgewählten Text einen modifizierten Benutzeragent, der angibt, dass die Anfrage von einem ansonsten bekannten Browser stammt, und der angibt, dass ein Suchdienst Ergebnisse zum Wiedergeben in einem Seitenleistensuchbereich zurückgeben soll;
Empfangen maßgeschneiderter Ergebnisse vom Suchdienst zur Anzeige im Seitenleistensuchbereich als Reaktion auf die Seitenleistensuchanfrage, wobei der modifizierte Benutzeragent es dem Suchdienst ermöglicht, die Antwort für den Seitenleistensuchbereich zu konfigurieren;
Anzeigen der maßgeschneiderten Suchergebnisse aus der Suche im Seitenleistensuchbereich als Reaktion auf das Empfangen der maßgeschneiderten Suchergebnisse; und
erneutes Wiedergeben der Hauptinhaltsseite innerhalb zweiter Abmessungen neben dem Seitenleistensuchbereich, wobei die zweiten Abmessungen kleiner als die ersten Abmessungen sind,
wobei es sich bei dem Browser um einen Browser mit Registerkarten handelt und die Hauptinhaltsseite sowie der Seitenleistensuchbereich dieselbe Registerkarte teilen,
wobei der Seitenleistensuchbereich eine Vielzahl von Steuerelementen beinhaltet, wobei mindestens zwei der Steuerelemente ein Suchfeld zum Verfeinern der Seitenleistensuchergebnisse und ein Suchsteuerelement zum Starten einer neuen Registerkartenanfrage beinhalten, und die Anweisungen bei ihrer Ausführung das Computersystem zu Folgendem veranlassen:
Empfangen einer Benutzereingabe eines Suchparameters in das Suchfeldsteuerelement;
Durchführen einer nachfolgenden Seitenleistensuche bei Auswahl des Suchfeldsteuerelements, wodurch neue Ergebnisse erzeugt werden; und
Wiedergeben der neuen Ergebnisse der nachfolgenden Seitenleistensuche im Seitenleistensuchbereich.

7. Computerlesbares Medium nach Anspruch 6, wobei die Anweisungen den Prozessor ferner dazu veranlassen, Mehrdeutigkeiten in der Seitenleistensuchanfrage aufzulösen.

8. Computerlesbares Medium nach Anspruch 7, wobei der Vorgang zum Auflösen von Mehrdeutigkeiten ferner Folgendes umfasst:
Bestimmen eines Kontexts der Hauptinhaltsseite, wobei der Kontext einer der folgenden ist: Sprache, Kategorie oder Bild.

9. Computerlesbares Medium nach Anspruch 6, wobei die Hauptinhaltsseite und der Seitenleistensuchbereich bei Auswahl eines Steuerelements zum Schließen der Registerkarte geschlossen werden.

10. System zum Anzeigen eines Seitenleistensuchbereichs, das System umfassend:
einen Prozessor; und
einen Speicher, auf dem ausführbare Anweisungen gespeichert sind, die bei Ausführung durch den Prozessor das System dazu veranlassen, ein Verfahren nach einem der Ansprüche 1 bis 5 durchzuführen.

11. System nach Anspruch 10, wobei der Suchdienst einen Suchdienst für Unternehmensdaten umfasst.

## Revendications

1. Procédé mis en œuvre par ordinateur permettant d'effectuer des opérations sur une interface utilisateur graphique, comprenant :
l'affichage, dans une application de navigation, d'une page de contenu principale ayant des premières dimensions ;
la réception du texte sélectionné dans la page de contenu principale afin de l'intégrer à la recherche dans la barre latérale ;
la réception d'une demande de recherche dans la barre latérale en fonction du texte sélectionné ;
l'envoi d'une requête de recherche dans la barre latérale à un service de recherche en vue de son traitement, la requête de recherche dans la barre latérale comprenant, outre le texte sélectionné à rechercher, un agent utilisateur modifié indiquant que la requête provient d'un navigateur par ailleurs connu et indiquant qu'un service de recherche doit renvoyer des résultats destinés à être affichés dans un volet de recherche de la barre latérale ;
en réponse à la requête de recherche dans la barre latérale, la réception des résultats personnalisés du service de recherche destinés à être affichés dans le volet de recherche de la barre latérale, dans lequel l'agent utilisateur modifié permet au service de recherche de configurer la réponse destinée au volet de recherche de la barre latérale ;
en réponse à la réception des résultats personnalisés, l'affichage, dans l'application de navigation, des résultats personnalisés issus de la recherche dans le volet de recherche de la barre latérale ; et
le ré-affichage de la page de contenu principale dans des secondes dimensions, à côté du volet de recherche de la barre latérale, dans lequel les secondes dimensions sont plus petites que les premières dimensions,
dans lequel le navigateur est un navigateur à onglets et la page de contenu principale et le volet de recherche de la barre latérale se trouvent dans le même onglet ;
dans lequel le volet de recherche de la barre latérale comporte une pluralité commandes, dans lequel au moins deux des commandes comportent un champ de recherche permettant d'affiner les résultats de recherche de la barre latérale et une commande de Recherche dans un onglet permettant d'initier une demande d'ouverture d'un nouvel onglet, dans lequel le procédé comprend en outre :
la réception d'une entrée utilisateur d'un paramètre de recherche dans le champ de recherche ;
lorsque l'on sélectionne le champ de recherche, le déclenchement d'une nouvelle recherche dans la barre latérale, ce qui génère de nouveaux résultats ; et
l'affichage des nouveaux résultats de recherche de la recherche ultérieure dans le volet de recherche de la barre latérale.

2. Procédé mis en œuvre par ordinateur selon la revendication 1, dans lequel les résultats personnalisés comportent une pluralité d'options de recherche verticale permettant d'affiner le contenu du volet de recherche de la barre latérale.

3. Procédé mis en œuvre par ordinateur selon la revendication 1, comprenant en outre la levée de l'ambiguïté de la requête de recherche dans la barre latérale.

4. Procédé mis en œuvre par ordinateur selon la revendication 3, dans lequel la levée de l'ambiguïté comprend :
la détermination d'un contexte de la page de contenu principale, dans lequel le contexte est l'un parmi : une langue, une catégorie ou une image.

5. Procédé mis en œuvre par ordinateur selon la revendication 1, dans lequel la page de contenu principale et le volet de recherche de la barre latérale sont fermés lors de la sélection d'un élément de commande permettant de fermer l'onglet.

6. Support lisible par ordinateur, sur lequel sont stockées des instructions exécutables par ordinateur qui, lorsqu'elles sont exécutées par un processeur, amènent un système informatique à :
afficher, dans une application de navigation, une page de contenu principale ayant des premières dimensions ;
recevoir du texte sélectionné au sein de la page de contenu principale en vue d'une recherche dans la barre latérale ;
recevoir une requête de recherche dans la barre latérale en fonction du texte sélectionné ;
envoyer une requête de recherche dans la barre latérale à un service de recherche en vue de son traitement, la requête de recherche dans la barre latérale comprenant, outre le texte sélectionné à rechercher, un agent utilisateur modifié indiquant que la requête provient d'un navigateur par ailleurs connu et indiquant qu'un service de recherche doit renvoyer des résultats destinés à être affichés dans un volet de recherche de la barre latérale ;
en réponse à la requête de recherche dans la barre latérale, recevoir des résultats personnalisés du service de recherche destinés à être affichés dans le volet de recherche de la barre latérale, dans lequel l'agent utilisateur modifié permet au service de recherche de configurer la réponse destinée au volet de recherche de la barre latérale ;
en réponse à la réception des résultats personnalisés, afficher, dans l'application de navigation, des résultats personnalisés issus de la recherche dans le volet de recherche de la barre latérale ; et
ré-afficher la page de contenu principale dans des secondes dimensions, à côté du volet de recherche de la barre latérale, dans lequel les secondes dimensions sont plus petites que les premières dimensions,
dans lequel le navigateur est un navigateur à onglets et la page de contenu principale et le volet de recherche de la barre latérale se trouvent dans le même onglet,
dans lequel le volet de recherche de la barre latérale comporte une pluralité de commandes, dans lequel au moins deux des commandes comportent un champ de recherche permettant d'affiner les résultats de recherche de la barre latérale et une commande de Recherche dans un onglet permettant d'initier une requête d'ouverture de nouvel onglet, et les instructions, lorsqu'elles sont exécutées, amènent le système informatique à :
recevoir une entrée utilisateur d'un paramètre de recherche dans le champ de recherche ;
lorsque l'on sélectionne le champ de recherche, déclencher une nouvelle recherche dans la barre latérale, ce qui génère de nouveaux résultats ; et
afficher les nouveaux résultats de recherche de la recherche ultérieure dans le volet de recherche de la barre latérale.

7. Support lisible par ordinateur selon la revendication 6, amenant en outre le processeur à lever l'ambiguïté de la requête de recherche dans la barre latérale.

8. Support lisible par ordinateur selon la revendication 7, dans lequel l'opération de levée d'ambiguïté comprend en outre :
la détermination d'un contexte de la page de contenu principale, dans lequel le contexte est l'un parmi : une langue, une catégorie ou une image.

9. Support lisible par ordinateur selon la revendication 6, dans lequel la page de contenu principale et le volet de recherche de la barre latérale sont fermés lors de la sélection d'un élément de commande permettant de fermer l'onglet.

10. Système permettant d'afficher un volet de recherche de la barre latérale, le système comprenant :
un processeur ; et
une mémoire stockant des instructions exécutables qui, lorsqu'elles sont exécutées par le processeur, amènent le système à mettre en œuvre un procédé conformément à l'une quelconque des revendications 1-5.

11. Système selon la revendication 10, dans lequel le service de recherche comprend un service de recherche de données d'entreprise.
